(19) Europäisches Patentamt
European Patent Office
Office européen des brevets

(11) **EP 4 530 948 A1**

(12) **EUROPEAN PATENT APPLICATION**

(43) Date of publication:
**02.04.2025 Bulletin 2025/14**

(21) Application number: **23200994.4**

(22) Date of filing: **29.09.2023**

(51) International Patent Classification (IPC):
**G06Q 10/0631** (2023.01)    **G06Q 50/40** (2024.01)
**G08G 1/00** (2006.01)

(52) Cooperative Patent Classification (CPC):
**G06Q 10/0631; G06Q 50/40; G08G 1/202**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventors:
• **KUMAR, Abhay**
**560100 Bangalore, Karnataka (IN)**
• **NAGAR, Deepak**
**110030 New Delhi (IN)**
• **RAMANATH, Vinay**
**560070 Bengaluru, Karnataka (IN)**
• **VAZHAPPULLY, Chitira**
**560034 Bangalore, Karnataka (IN)**

(74) Representative: **Patentanwaltskanzlei WILHELM & BECK**
**Prinzenstraße 13**
**80639 München (DE)**

(54) **METHOD AND SYSTEM FOR MANAGING DISPATCH OF VEHICLE FLEET**

(57)     A system (200) and method (100) for managing dispatch of vehicle fleet. The method (100) includes receiving information associated with a plurality of blocks to be served by a fleet of vehicles and determining that information of at least one critical block period is unavailable based on the information associated with the plurality of blocks. Further, the method includes determining the at least one critical block period based on at least one block requiring a number of non-EVs greater than an available number of non-EVs in the fleet of vehicles; scheduling the fleet of vehicles for serving the plurality of blocks by reducing a proportion of a number of non-EVs to serve the at least one critical block period; and dispatching the fleet of vehicles for serving the plurality of blocks comprising the at least one critical block period.

FIG 5

**Description**

The present disclosure relates generally to electric vehicle (EV) fleet management, and more specifically to a method and system for managing dispatch of vehicle fleet.

Electric vehicles (EVs) are promoted and encouraged by public and private agencies worldwide considering contribution of various non-renewable energy sources to global warming crisis and energy crisis. The EVs on the other hand are environmentally friendly and have the feature of flexible power storage because of which market share of the EVs have steadily increased in recent years. As a result, most depot owners have started migrating towards the EVs. To support this migration without affecting depot operations, many researchers have been working on developing smart scheduling mechanisms. Currently, EV fleet dispatch is done manually or with an excel spreadsheet. Some assign the EV to routes or blocks using basic scheduling algorithms to maximize its utilization. However, it does not account for both EVs and non-EVs when dispatching vehicles to support serving all the blocks/routes at any point during the operational day.

Conventional scheduling mechanism use a Mixed Integer Linear Programming (MILP) based mathematical optimization approach to optimally assign the EVs to routes subjected to capacity constraints. The problem is formulated as a multi-objective optimization problem, with a primary goal of improving EV utilization. However, it does not ensure fulfilment or coverage of all the blocks either with EVs or non- EVs at any given time instance.

In some conventional methods and systems, the EVs of the vehicle fleet are reserved to serve the blocks with the largest distance. As a result, they do not ensure the fulfilment or coverage of all the blocks either with EVs or non-EVs at any given time instance. However, there may be scenarios when the number of routes during a portion of the day might be higher, and the said routes may not have larger distances to be covered. In such scenarios, there can be a shortage of the non-EVs required to serve all the blocks leaving some of the blocks unserved. This is not desirable; block fulfilment is critical for the fleet owners at any point of the operation day.

In light of the above, there remains a need for an improved method for managing the EV fleet dispatch with block fulfilment especially during the critical block period.

The present disclosure seeks to overcome these challenges by identifying critical block periods where maximum number of blocks needs to be served and make sure that all the routes during critical block periods are served either by EV or Non- EV. At the same time maintain the objective of maximizing the EV utilization and depot earnings. Therefore, the revised approach enhances the efficiency of EV utilization in the vehicle fleet at the same time ensuring block fulfilment in the most environmentally friendly manner. Hence, this enhanced approach leads to maximizing EV utilization, maximized depot earnings, and reduced carbon emissions. The present disclosure offers a more comprehensive and efficient solution for managing the EV fleets, contributing to both environmental and operational improvements.

The object of the present disclosure is achieved by a computer-implemented method for managing vehicle fleet dispatch. The method includes receiving information associated with a plurality of blocks to be served by a fleet of vehicles, wherein the fleet of vehicles comprises a plurality of EVs and a plurality of non-EVs and determining that information of at least one critical block period is unavailable based on the information associated with the plurality of blocks. The method also includes determining the at least one critical block period based on at least one block period requiring a number of non-EVs greater than an available number of non-EVs in the fleet of vehicles; scheduling the fleet of vehicles for serving the plurality of blocks by reducing a proportion of a number of non-EVs to serve the at least one critical block period; and dispatching the fleet of vehicles for serving the plurality of blocks comprising the at least one critical block period.

In one or more embodiments, the method further includes determining that the at least one critical block period is available based on the information associated with the plurality of blocks and providing a priority score for the plurality of blocks, wherein the at least one critical block period is provided a highest priority. The method also includes scheduling the fleet of vehicles for serving the plurality of blocks by increasing a proportion of a number of EVs of the plurality of EVs based on the priority score; and dispatching the fleet of vehicles for serving the plurality of blocks comprising the at least one critical block period.

In one or more embodiments, the assigning of the EVs provides maximized utilization of the plurality of EVs.

In one or more embodiments, the assigning of the non-EVs comprises the number of non-EVs required to serve the plurality of blocks other than the at least one critical block period in an operational day is less or equal to the number of the non-EVs available during day.

In one or more embodiments, determining the at least one critical block period based on the at least one block period requiring the maximum number of vehicles of the fleet of vehicles for serving includes determining the number of EVs of the plurality of EVs and the number of non-EVs of the plurality of non-EVs based on the information associated with the plurality of blocks to be served by the fleet of vehicles and comparing the number of EVs and the number of non-EVs with a number of blocks of the plurality of blocks to be served during the operational day. The method also includes determining instances of the number of the blocks required to be served, exceeding the number of non-EVs; and determining the at least one critical block period based on the determined instances.

In one or more embodiments, the proportion of the number of EVs of the plurality of EVs is assigned to the at least one critical block period such that a required number of non-EVs is less than the number of non-EVs of the plurality of EVs.

The object of the present disclosure is also achieved by a system for managing vehicle fleet dispatch. The system includes a processor and a memory coupled to the processor. The memory includes instructions which, when executed by the processor, configures the processor to receive information associated with a plurality of blocks to be served by a fleet of vehicles, wherein the fleet of vehicles comprises a plurality of EVs and a plurality of non-EVs. The processor is also configured to determine that information of at least one critical block period is unavailable based on the information associated with the plurality of blocks and determine the at least one critical block period based on at least one block period requiring a number of non-EVs greater than an available number of non-EVs in the fleet of vehicles. Further, the processor is configured to schedule the fleet of vehicles for serving the plurality of blocks by reducing a proportion of a number of non-EVs to serve the at least one critical block period and dispatch the fleet of vehicles for serving the plurality of blocks comprising the at least one critical block period.

The object of the present disclosure is further achieved by a computer program code which, when executed by a processor, causes the processor to carry out steps of the aforementioned method.

The object of the present disclosure is further achieved by a computer program product comprising computer program code which, when executed by a processor, causes the processor to carry out steps of the aforementioned.

Still other aspects, features, and advantages of the disclosure are readily apparent from the following detailed description, simply by illustrating a number of particular embodiments and implementations, including the best mode contemplated for carrying out the disclosure. The disclosure is also capable of other and different embodiments, and its several details may be modified in various obvious respects, all without departing from the scope of the disclosure. Accordingly, the drawings and description are to be regarded as illustrative in nature, and not as restrictive.

A more complete appreciation of the present disclosure and many of the attendant aspects thereof will be readily obtained as the same becomes better understood by reference to the following description when considered in connection with the accompanying drawings:

FIG 1    is a flowchart representation of a computer-implemented method for managing vehicle fleet dispatch, in accordance with one or more embodiments of the present disclosure;

FIG 2    is a block diagram representation of a system for managing the vehicle fleet dispatch, in accordance with one or more embodiments of the present disclosure;

FIG 3    is an exemplary depiction of EV and Non-EV block allocation during a single operational cycle, in accordance with prior arts;

FIG 4    is an exemplary depiction of a number of critical blocks that need to be served during a single operational cycle, in accordance with one or more embodiments of the present disclosure;

FIG 5    is an exemplary depiction of EV and Non-EV block allocation during the single operational cycle, in accordance with one or more embodiments of the present disclosure;

FIG 6    is an exemplary depiction of comparison between EV and Non-EV block allocation for the single operational cycle by existing solutions and proposed solution, in accordance with one or more embodiments of the present disclosure;

FIG 7A    is an exemplary depiction of comparison of EV block allocation for the single operational cycle before and after implementation of the proposed solution, in accordance with one or more embodiments of the present disclosure; and

FIG 7B    is an exemplary depiction of comparison of non-EV block allocation for the single operational cycle before and after implementation of the proposed solution, in accordance with one or more embodiments of the present disclosure.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for managing vehicle fleet dispatch are disclosed herein. In the following description, for the purposes of explanation, numerous specific details are set forth in order to provide a thorough understanding of the embodiments of the disclosure. It is apparent, however, to one skilled in the art that the embodiments of the disclosure may be practiced without these specific details or with an equivalent arrangement. In other instances, well-known structures and devices are shown in block diagram form in order to avoid unnecessarily obscuring the embodiments of the disclosure.

Throughout the disclosure the terms "block" and "route" may be used interchangeable and means one and the same, as known to a person skilled in art from the domain concerned.

Conventional MILP based methods and systems, do not ensure the fulfilment or coverage of all the blocks either with EVs or non-EVs at any given time instance as they reserve the EVs to serve the blocks with the largest distance. However, there may be scenarios when the number of routes during a portion of the day might be higher, and the said routes may not have larger distances to be covered. In such scenarios, there can be a shortage of the non-EVs required to serve all the blocks leaving some of the blocks unserved.

Unlike to the conventional methods and the systems, the proposed solution focuses on assured block fulfilment at any given time instance during the operational day. This is done by identifying the critical block periods and make sure that all the critical block periods should be possible to be served either by EV or Non- EV. At the same time maintain the objective of maximizing the EV utilization and depot earnings. The proposed solution assists depot owners in determining the optimal number of EVs and non-EVs required to carry out daily depot operations.

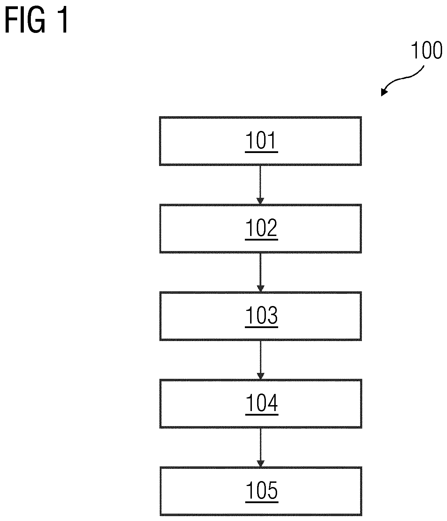

Referring now to FIG 1, illustrated is a flowchart of a method (as represented by reference numeral 100) for managing vehicle fleet dispatch, in accordance with an embodiment of the present disclosure. As used herein, managing the EV fleet dispatch with the block fulfilment refers to serving all the blocks in the operation day with managing the EV fleet effectively to a maximum extent. This approach aims to increase the allocation of the EVs to serve critical block periods to ensure higher EV utilization at the same time the higher use of the EVs also ensures that all the blocks are completely served either by the EVs or the non-EVs of the vehicle fleet. This approach enhances EV utilization efficiency as well as being environmentally compatible as it reduces carbon emission due to increased EV fleet allocation.

The present disclosure involves a system (200) and a method (100) for managing the vehicle fleet dispatch. The method (100) includes receiving information associated with a plurality of blocks to be served by a fleet of vehicles and determining that details of critical block period is unavailable based on the information associated with the plurality of blocks. Further, the method includes determining the at least one critical block period based on at least one block period requiring a number of non-EVs greater than an available number of non-EVs in the fleet of vehicles. On determining the critical block period, the method includes scheduling the fleet of vehicles for serving the plurality of blocks by reducing a proportion of a number of non-EVs to serve the at least one critical block period and dispatching the fleet of vehicles for serving the plurality of blocks comprising the at least one critical block period.

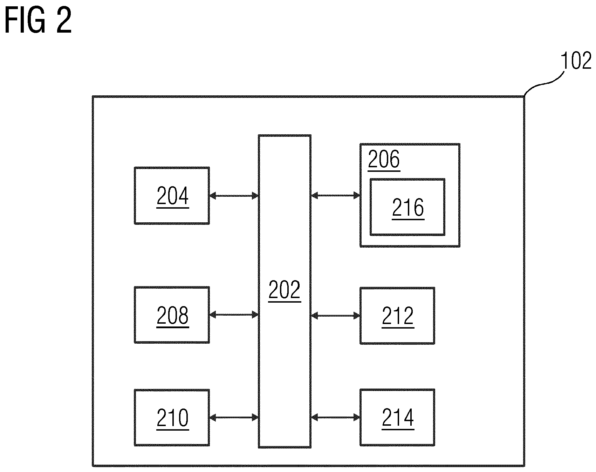

Referring to FIG 2, illustrated is a block diagram of a system 200 for managing the vehicle fleet dispatch with block fulfilment, in accordance with one or more embodiments of the present disclosure. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product 200 programmed for performing the said purpose. The system 200 may be incorporated in one or more physical packages (e.g., chips of a mobile device). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes a processor 204 and a memory 206. Herein, the memory 206 is communicatively coupled to the processor 204. In an example, the memory 206 may be embodied as a computer readable medium on which program code sections of a computer program are saved, the program code sections being loadable into and/or executable in a system to make the system 200 execute the steps for performing the said purpose.

Generally, as used herein, the term "processor" refers to a computational element that is operable to respond to and processes instructions that drive the system 200. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory 206 may be volatile memory and/or non-volatile memory. The memory 206 may be coupled for communication with the processor 204. The processor 204 may execute instructions and/or code stored in the memory 206. A variety of computer-readable storage media may be stored in and accessed from the memory 206. The memory 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processor 204 has connectivity to the bus 202 to execute instructions and process information stored in the memory 206. The processor 204 may include one or more processing cores with each core configured to perform independently. A multi-core processor enables multiprocessing within a single physical package. Examples of a multi-core processor include two, four, eight, or greater numbers of processing cores. Alternatively, or in addition, the processor 204 may include one or more microprocessors configured in tandem via the bus 202 to enable independent execution of instructions, pipelining, and multithreading. The processor 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that can be queried, analysed, and processed to support various applications and business processes. In the system 200, the database 210 provides mechanisms for storing, retrieving, updating, and deleting data, and typically includes features such as data validation, security, backup and recovery, and data modelling. The database 210 includes data associated with the determined critical block periods and also priority scores assigned to the critical block periods.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display. It is to be understood that, when reference is made in the present disclosure to the term "display" this refers generically either to a display screen on its own or to the screen and an associated housing, drive circuitry and possibly a physical supporting structure, of which all, or part of is provided for displaying information.

In the present system 200, the processor 204 and accompanying components have connectivity to the memory 206 via the bus 202. The memory 206 includes both dynamic memory (e.g., RAM, magnetic disk, writable optical disk, etc.) and static memory (e.g., ROM, CD-ROM, etc.) for storing executable instructions that when executed perform the method steps described herein for managing the EV fleet dispatch with block fulfilment. In particular, the memory 206 includes a Block management unit 216 to perform steps for managing the EV fleet dispatch with the block fulfilment. Also, in the system 200, the memory 206 may be configured to store the data associated with or generated by the execution of the inventive steps.

Referring to FIGS 1 and 2 in combination, the various steps of the method 100 as described hereinafter may be executed in the system 200, or specifically in the processor 204 of the system 200, for - managing the EV fleet dispatch with block fulfilment. For purposes of the present disclosure, the managing the EV fleet dispatch with block fulfilment present method 100 is embodied as a scheduling algorithm for scheduling the vehicle fleet while ensuring the block fulfilment. It may be appreciated that although the method 100 is illustrated and described as a sequence of steps, it may be contemplated that various embodiments of the method 100 may be performed in any order or a combination and need not include all of the illustrated steps.

In embodiments of the present disclosure, at step 101, the method 100 includes the receiving information associated with a plurality of blocks to be served by a fleet of vehicles. The information associated with a plurality of blocks to be served can include but not limited to a number of blocks, number of blocks to be served in a time slot, minimum number of vehicles required to serve each block, distance to be served in each block, a type of vehicle required to serve the block, a time duration required to serve the block, etc. The fleet of vehicles includes a plurality of EVs and a plurality of non-EVs. The non-EVs can be diesel vehicles, petrol vehicles, etc. This information may be gathered from a fleet management system, which typically tracks and manages various aspects of fleet operations, including route planning. To receive the information associated with the plurality of blocks, the system 200 may interface with a Block management system through an Application Programming Interface (API) or other data exchange mechanisms, via the interface 208. Once the information associated with the plurality of blocks has been obtained, it can be stored in the database 210, which serves as a central repository for the data required by the system 200. The database 210 may be designed using relational or non-relational database management systems, depending on the specific requirements and preferences of the system 200.

In embodiments of the present disclosure, at step 102, the method 100 includes, determining that information of at least one critical block period is unavailable based on the information associated with the plurality of blocks. The critical block period can be directly provided to the system 200. However, the proposed disclosure primarily addresses the scenario where the critical block period is not available with the system 200 based on the information associated with the plurality of blocks. The system 200 identifies whether the critical block period data is provided as part of the information associated with the plurality of blocks. If the critical block period data is not available, then the system 200 proceeds to step 103. The critical block period occurs in the operation day when a number of non-EVs required to serve the block becomes greater than the available number of non-EVs in the fleet of vehicles.

In embodiments of the present disclosure, at step 103, the method 100 includes determining the at least one critical block period based on at least one block period requiring a number of non-EVs greater than the available number of non-EVs in the fleet of vehicles. The system 200 determines the set of blocks of the plurality of blocks where the number of non-EVs required for serving the routes is greater than the available number of non-EVs in the fleet of vehicles. Once the set of such block periods are identified then those block periods are the critical block periods. The maximum number of vehicles is determined with both the EVs and the non-EVs combined together. The method includes determining the number of EVs of the plurality of EVs and the number of non-EVs of the plurality of non-EVs based on the information associated with the plurality of blocks to be served by the fleet of vehicles and comparing the number of EVs and the number of non-EVs with a number of blocks of the plurality of blocks to be served during the operational day. In the present context, the defined operation period for the EV refers to a specific time window during which the EV is expected to complete its assigned routes and other activities. This operation period is typically established by the fleet operator based on factors such as operational demands and resource availability. The defined operation period can range from a single day to multiple days or even weeks, depending on nature and specific needs of the fleet operations. During the operation period, the EV needs to cover its designated routes while also ensuring that its battery maintains a sufficient SoC to meet the energy requirements of the journey.

Further, the method includes determining instances of the number of the blocks required to be served which exceed the number of non-EVs and determining the critical block periods based on the determined instances. The critical block periods will not occur when the number of blocks that must be served is less than the total number of non-EVs. This is because even if the scheduling mechanism does not assign any block to be served by the EVs at some point during these time periods in order to achieve maximum utilization, there are enough non-EVs to serve these routes.

In embodiments of the present disclosure, at step 104, the method 100 includes scheduling the fleet of vehicles for serving the plurality of blocks by reducing a proportion of a number of non-EVs to serve the at least one critical block period. Here, the proposed solution includes reducing the proportion of the number of non-EVs and eventually increasing the number of EVs to serve the critical block period. As a result, the EV utilization is increased at the same time ensuring that all the blocks especially the critical block periods are completely served during the operational day. The increase in EV utilization refers to increased usage of the EVs from the vehicle fleet as compared to the non-EVs. Here, the scheduling is done such that the number of EVs that are scheduled increases as compared to the conventional methods. The schedule may be communicated to the corresponding EVs and the non-EVs through messages or an application.

In order to schedule of the fleet of vehicles, the method 100 employs a computational solution to an optimization model that takes into account various constraints which includes but is not limited to block fulfilment constraint. The block fulfilment constraint is incorporated into the optimization model to ensure that the block fulfilment is performed in a manner that adheres to the EV utilization requirements. These constraints help the optimization model to generate a schedule that is consistent with the actual operational requirements of the vehicle fleet.

In embodiments of the present disclosure, at step 105, the method 100 includes dispatching the fleet of vehicles for serving the plurality of blocks comprising the at least one critical block period. The scheduled EVs and the non-EVs are then dispatched to the corresponding blocks to which they are allocated.

In present embodiments, the method 100 further includes a scenario where the at least one critical block period is available based on the information associated with the plurality of blocks. Then the proposed solution includes providing a priority score for the plurality of blocks throughput the operation day. For example, if there are 10 blocks in the operation day then each of the blocks are provided the priority score with the critical block period being provided the highest priority score. Further, the method includes scheduling the fleet of vehicles for serving the plurality of blocks by increasing the proportion of the number of EVs of the plurality of EVs based on the priority score and dispatching the fleet of vehicles for serving the plurality of blocks comprising the at least one critical block period.

Here, the increased proportion of the number of EVs allocated to serve the critical block period ensures maximized utilization of the plurality of EVs. The non-EVs are assigned such that the number of non-EVs required to serve the plurality of blocks other than the at least one critical block period in the operational day is less or equal to the number of the non-EVs available during day. Therefore, the proposed solution provides improved EV utilization for fleet owner, increased profitability to the fleet owners and the entire process is environmentally friendly due to the reduction in carbon emission. Therefore, the proposed solution reduces the dependency on the non-EVs for serving the critical block periods by prioritizing the usage of the EVs for the same. As a result, this helps to eventually phase-out the non-EVs from the vehicle fleet.

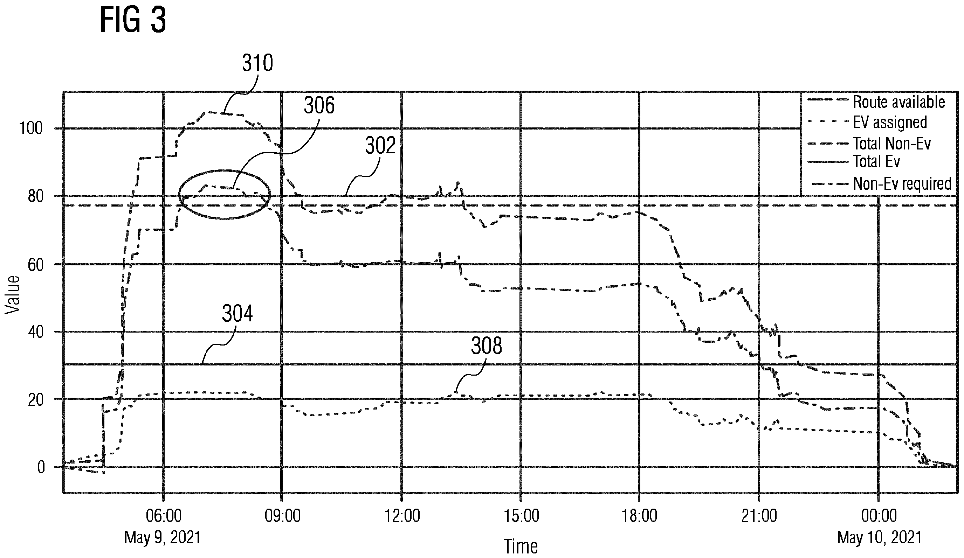

FIG 3 is an exemplary depiction of the EV and the Non-EV block allocation during a single operational cycle, in accordance with prior arts. Conventional EV fleet scheduling solutions such as MILP based EV fleet scheduling mechanism perform the scheduling based on the distance associated with the blocks. Here, the blocks with the longest distance are traditionally mapped to the EVs to ensure maximum utilization of the EVs. However, consider certain scenarios where the blocks having the longest distances are restricted to a specific portion of the day such as for example evening time only. The problem arising while scheduling the EVs with the conventional MILP based scheduling mechanism is that the EVs are restricted to the evening slot alone and the EVs are never used for the morning slot where certain blocks my not be fulfilled due to a shortage in the number of vehicles.

For example, consider the FIG. 3, at 302 the total number of non-EVs available in the vehicle fleet is 78 and the total number of EVs available is 30 (as indicated by 304) while the number of blocks available is 105 (as indicated by 310). At 306, between time period 6:30 AM to 8:30 AM the number of non-EVS required is 83 which is greater than the number of non-EVs available (i.e., 78). The conventional scheduling mechanism allocates only 22 EVs as the EVs are reserved to serve the longest blocks which may not be part of the 105 routes required to be served between the time period 6:30 AM to 8:30 AM. As a result, only 100 routes are served (78 non-EVs + 22 EVs), resulting in some blocks of the 105 blocks remaining unserved. Thus, automatic dispatch mechanisms should ensure that the EVs and the non-EVs are dispatched in such a way that the block fulfilment is met.

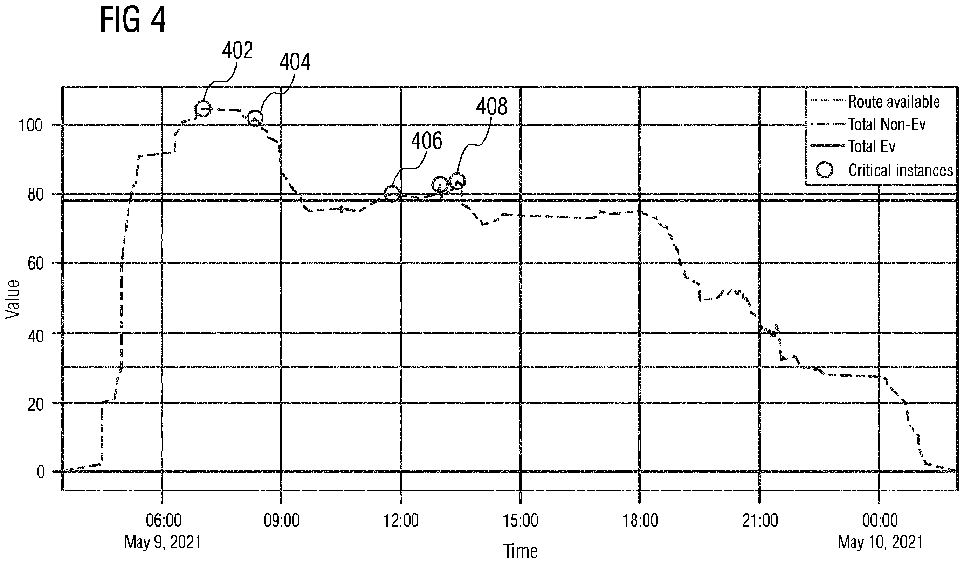

FIG 4 is an exemplary depiction of a number of critical block periods that need to be served during the single operational cycle, in accordance with one or more embodiments of the present disclosure. Consider a scenario where the critical block period is unavailable or unknown before scheduling the EV fleet. Then, it may be difficult to prioritize the EVs while scheduling which may not provide the best utilization of the EVs along with ensuring block fulfilment.

Therefore, the proposed solution includes usage of the fleet size as an input to determine the number of EVs and the number of non-EVs. Then compare it to the total number of routes that must be served at any given time during the operational day to determine the critical block periods. For example, referring to the FIG. 4 in conjunction with the FIG. 3, the total number of EVs available is 30 and the total number of non-EVs available is 78, therefore the fleet size is 108. The critical periods as determined from the graph provided in the FIG. 4 are the peaks in the curve depicting the routes. The critical block periods are at point 402 where the number of routes are 105, point 404 where the number of routes are 102, point 406 where the number of routes are 80 and points 408 where the number of routes are 82 and 84. In the critical block periods mentioned above, the total number of routes goes beyond the total number of non-EVs available i.e., 78. Hence, in order to effectively ensure block fulfilment, the EVs need to be scheduled along with the non-EVs.

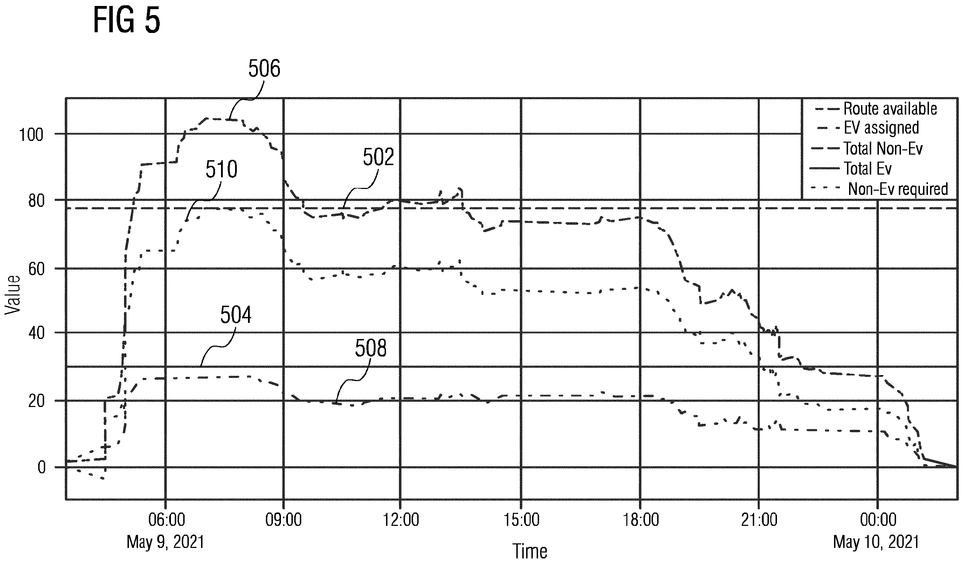

FIG 5 is an exemplary depiction of EV and Non-EV block allocation during the single operational cycle, in accordance with one or more embodiments of the present disclosure. Referring to the FIG. 5, in conjunction with the FIG. 3 and the FIG. 4, the problems depicted in the above two cases are addressed by the proposed solution. In general, the critical block period does not occur when the number of routes that must be served is less than the total number of non-EVs. This is because even if the dispatch mechanism does not assign any route to the EVs at some point during these time periods in order to achieve maximum utilization, there are enough non-EVs to serve the routes.

Therefore, the critical block periods always occur when the number of routes (506) that must be served exceeds the total number of non-EVs (502) between the 6.30AM to 8.30AM time slot. Here, local maxima(s) of the route available curve (506) that lie above the total non-EVs line (502) are considered for determining the critical block periods. During the critical block periods the proposed solution assigns a set of the EVs of the total number of EVs in such a way that the number of non-EVs required to serve the number of routes are less than the total number of non-EVs available at the time instance of local maxima of the route available curve. As a result, the block fulfilment is automatically ensured at all other time instances.

From the FIG. 4, two critical block periods (6.30 AM to 8.30AM and 11.45 AM to 2.00PM) and five critical instances (402-408) are identified. In the two critical block periods at each instance, the number of non-EVs required to serve the number of routes should be less than the total number of non-EVs available in the depot. However, checking this condition for every instance is cumbersome, computationally expensive and time consuming. Hence, the proposed solution includes identifying local maximas (i.e., the critical instances) where the above condition is satisfied, then it implies that the said condition is satisfied in all the instances within the critical block period comprising the critical instances. Here, the optimization model is a mathematical formulation that aims to find the best possible solution to a problem while considering various constraints and objectives. In the present embodiments, the optimization model is a Mixed-Integer Linear Programming (MILP) model. MILP is a type of optimization problem that combines linear programming (LP) techniques with integer constraints. In a mixed-integer linear programming problem, some of the decision variables are required to take integer values, while others can take continuous values. This combination of integer and continuous variables allows MILP models to address a wide range of real-world problems, such as scheduling, routing, and resource allocation. The optimization model employed in the present method 100 seeks to optimally schedule the EV fleet while considering constraints related to block fulfilment. By solving the optimization model, the method 100 aims to determine a schedule that maximizes the usage of the EVs in the vehicle fleet and ensures block fulfilment effectively.

The proposed solution includes assigning the EVs at the critical block periods by incorporating the block fulfilment constraint in equation (1):

$$\left(AvaRoute_i - \sum_b \sum_r^{AvaRoute}\left(B2R_{r,b}\right) \leq Total_{non-EVs}\right) \quad \forall \, b \in Bus, \; i \in Critical \; Instances,$$

$$r \in blocks \; at \; the \; critical \; instance \; or \; interval \qquad (1)$$

The equation (1) is solved to produce the optimal solution for dispatching the EVs such that the block fulfilment is ensured at all instances of time. Here, in the optimization model, the objective function is defined such that the total number of routes to be served during the critical period is less than the number of non-EVs available. The optimization model is solved by a solver to determine the schedule for dispatching the EV fleet with block fulfilment, which is the solution that maximizes the objective function while satisfying the block fulfilment constraint. By solving this optimization problem, the method 100 can schedule increasingly the EVs to serve the critical block periods while also ensuring block fulfilment during the operation day.

The outcome of the proposed algorithm for the vehicle fleet comprising of 30 EVs and 78 non-EVs is depicted in the FIG. 5. Here, 508 indicates the number of EVs allocated by the proposed solution. It can be noted that the number of EVs are assigned in such a way that their utilization is maximized and the number of non-EVs (510) required to serve other blocks throughout the operation day is less or equal to the number of non-EVs available during the day. Therefore, with the proposed solution at any point in time during the operation day, all the routes can be served by either by the EVs or the non-EVs or a combination of both.

In another embodiment, consider the scenario where the critical block period during the operation day is known to the system 200. Then, the critical block period is provided as an input, and each operation day may have multiple critical block periods defined. To ensure that all routes available at any given instance are served by the vehicle fleet, the proposed solution prioritizes the critical block periods by providing the priority score. The priority score is provided to the block beginning between the critical block period while mapping the EVs to the multiple blocks. Based on the priority score the proposed solution attempts to serve the majority of the critical block periods with the EVs. As a result, the reliance on the non-EVs is reduced to cover the remaining blocks other than the critical block periods. This increases the likelihood of all blocks being fulfilled or covered, either with EVs or non-EVs, at any given time instance.

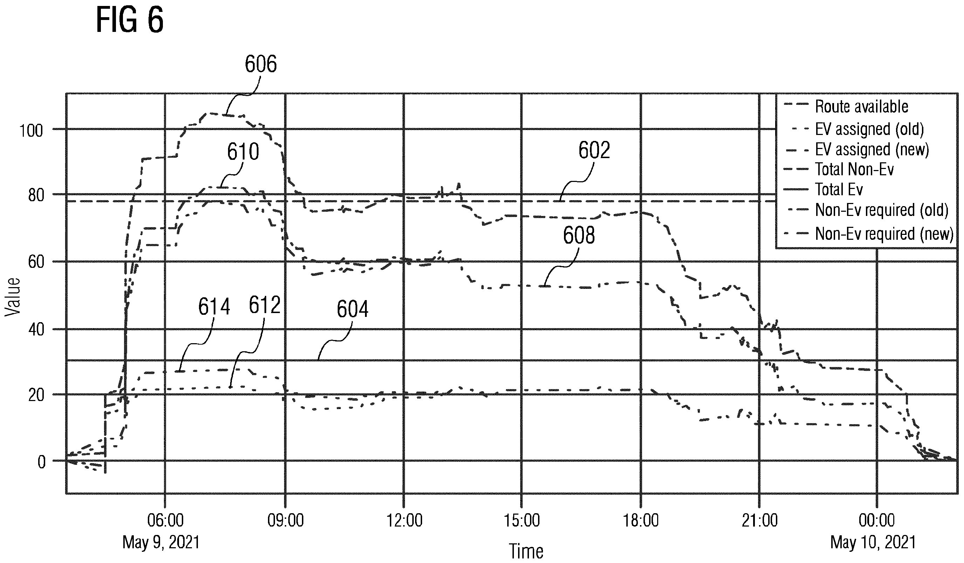

FIG 6 is an exemplary depiction of comparison between the EV and the Non-EV block allocation for the single operational cycle by existing solutions and proposed solution, in accordance with one or more embodiments of the present disclosure. Referring to the FIG. 6, consider that the total number of non-EVs available is 78 (indicated by 602 in the FIG. 6) and the total number of EVs is 30 (indicated by 604). When comparing the proposed solution to the existing solution for the block fulfilment consider time instance 07:03 where a total of 105 routes (606) needs be served. The conventional block fulfilment approach would have assigned 83 non-EVs (610) and 22 EVs (612) to achieve the required number of vehicles for the block fulfilment. But the number of non-EVs available at this time is 78 (602), which is less than the required number of non-EVs i.e., 83 (610). As a result, the conventional block fulfilment approach may not provide a feasible solution for the block fulfilment especially during the critical block period. to maximize the utilization of the EVs in the vehicle fleet

Unlike to the conventional methods and systems, the proposed solution keeps the EV utilization high during the critical block period along with ensuring that the required number of vehicles are available with a balanced blend of the non-EVs and the EVs. The proposed solution assigns all the 78 non-EVs (602) available at the time instance 07:03 and fulfils the other requirement of the vehicles by allocating 27 EVs (614) for the block fulfilment of the critical block period.

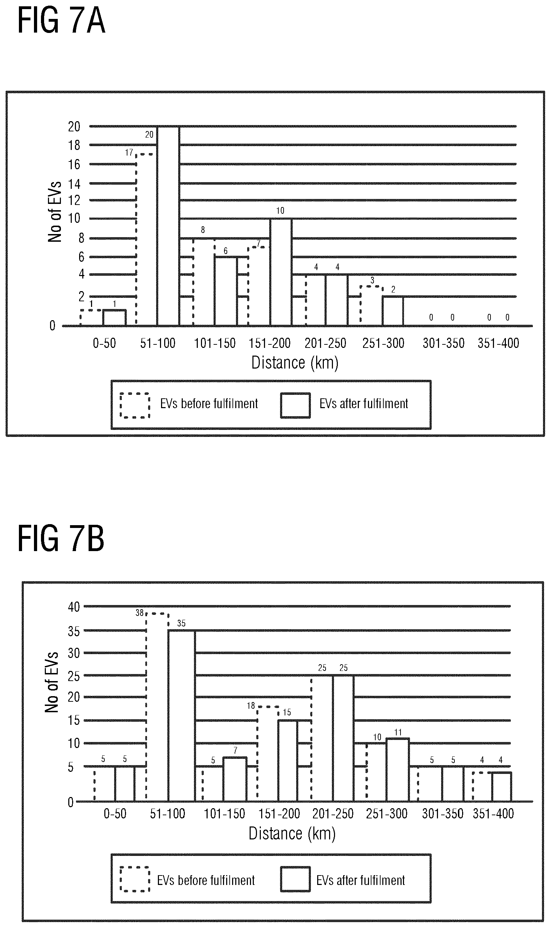

FIG 7A is an exemplary depiction of comparison of EV block allocation for the single operational cycle before and after implementation of the proposed solution, in accordance with one or more embodiments of the present disclosure. Referring to the FIG. 7A, when the distance is a range of 51-100 Kms and 151-200 Kms the number of EVs allocated for block fulfilment is greater in the proposed solution than in the existing allocation methods. Therefore, the critical block period is determined to be in the range of 51-100 Kms and 151-200 Kms and hence the allocation of the EVs is increased as compared to the non-EVs.

FIG 7B is an exemplary depiction of comparison of non-EV block allocation for the single operational cycle before and after implementation of the proposed solution, in accordance with one or more embodiments of the present disclosure. Referring to the FIG. 7B, in conjunction with the FIG. 7A, it may be noted that the allocation of the non-EVs in the corresponding range of 51-100 Kms and 151-200 Kms has been reduced when the proposed solution is implemented when compared to the existing allocation methods. Therefore, the proposed solution assigns a greater number of blocks to the EVs compared to existing solutions and assists the depot owner in determining the optimal number of non-EVs required to meet the daily requirement.

Thus, the method 100 and the system 200 of the present disclosure implements a method for managing the EV fleet dispatch with ensuring block fulfilment. The proposed solution address primarily the case when the critical block periods are not known to the system 200 as inputs, which determines the critical block periods based on a vehicle fleet size. Then the proposed solution uses schedules the vehicles fleet by reducing a proportion of the number of non-EVs allocated to the critical block period. As a result, the proposed solution not only ensures block fulfilment while scheduling but also ensures a reduction in carbon emission by the vehicle fleet by reducing the number of non-EVs during the critical block periods. The proposed solution also includes scheduling the vehicle fleet when the critical block period is known by prioritizing the critical block periods and assigning a higher number of EVs for the higher priority blocks. Again, the proposed solution ensures that an environmentally friendly scheduling mechanism with efficiently utilizing the number of the EVs in the vehicle fleet.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope.

**Claims**

1. A method for managing dispatch of vehicle fleet, the method (100) comprising:

   receiving information associated with a plurality of blocks to be served by a fleet of vehicles, wherein the fleet of vehicles comprises a plurality of EVs and a plurality of non-EVs;
   determining that information of at least one critical block period is unavailable based on the information associated with the plurality of blocks;
   determining the at least one critical block period based on at least one block period requiring a number of non-EVs greater than an available number of non-EVs in the fleet of vehicles;
   scheduling the fleet of vehicles for serving the plurality of blocks by reducing a proportion of a number of non-EVs to serve the at least one critical block period; and
   dispatching the fleet of vehicles for serving the plurality of blocks comprising the at least one critical block period.

2. The method (100) according to claim 1, further comprising:

   determining that the information of the at least one critical block period is available based on the information associated with the plurality of blocks;
   providing a priority score for the plurality of blocks, wherein the at least one critical block period is provided a highest priority score;
   scheduling the fleet of vehicles for serving the plurality of blocks by increasing a proportion of a number of EVs of the plurality of EVs based on the priority score; and
   dispatching the fleet of vehicles for serving the plurality of blocks comprising the at least one critical block period.

3. The method (100) according to claim 2, wherein the assigning of the EVs provides maximized utilization of the plurality of EVs.

4. The method (100) according to claim 2, wherein the assigning of the non-EVs comprises the number of non-EVs required to serve the plurality of blocks other than the blocks associated with the at least one critical block period in an operational day is less than or equal to the number of the non-EVs available during day.

5. The method (100) according to claim 1, wherein determining the at least one critical block period based on the at least one block period requiring the number of non-EVs greater than the available number of non-EVs in the fleet of vehicles comprises:

   determining the number of EVs of the plurality of EVs and the number of non-EVs of the plurality of non-EVs based on the information associated with the plurality of blocks to be served by the fleet of vehicles;
   comparing the number of EVs and the number of non-EVs with a number of blocks of the plurality of blocks to be served during the operational day;
determining instances of the number of the blocks required to be served, exceeding the number of non-EVs; and
determining the at least one critical block period based on the determined instances.

6. The method (100) according to claim 2, wherein the proportion of the number of EVs is assigned to the at least one critical block period such that a required number of non-EVs is less than the number of non-EVs.

7. The method (100) according to claim 1, wherein the maximum number of vehicles of the fleet of vehicles is an optimal number of the EVs and the non-EVs required to carry out depot operations in the operational day.

8. A system (200) for managing electric vehicle (EV) fleet dispatch with block fulfilment, the system (200) comprising:

a processor (204); and
a memory (206) coupled to the processor (204), wherein the memory (206) comprises instructions which, when executed by the processor (204), configures the processor (204) to:

receive information associated with a plurality of blocks to be served by a fleet of vehicles, wherein the fleet of vehicles comprises a plurality of EVs and a plurality of non-EVs,
determine that information of at least one critical block period is unavailable based on the information associated with the plurality of blocks,
determine the at least one critical block period based on at least one block period requiring a number of non-EVs greater than an available number of non-EVs in the fleet of vehicles,
schedule the fleet of vehicles for serving the plurality of blocks by reducing a proportion of a number of non-EVs to serve the at least one critical block period, and
dispatch the fleet of vehicles for serving the plurality of blocks comprising the at least one critical block period.

9. A computer program product, comprising computer program code which, when executed by a processor (204), cause the processor (204) to carry out the method (100) of one of the claims 1 to 7.

10. A computer-readable medium comprising a computer program product comprising computer program code which, when executed by a processor (204), cause the processor (204) to carry out the method (100) of one of the claims 1 to 7.

# FIG 1

100

```
┌─────────────────────┐
│         101         │
└─────────────────────┘
           │
           ▼
┌─────────────────────┐
│         102         │
└─────────────────────┘
           │
           ▼
┌─────────────────────┐
│         103         │
└─────────────────────┘
           │
           ▼
┌─────────────────────┐
│         104         │
└─────────────────────┘
           │
           ▼
┌─────────────────────┐
│         105         │
└─────────────────────┘
```

FIG 2

FIG 3

FIG 4

FIG 5

EP 4 530 948 A1

# FIG 6

EP 4 530 948 A1

# FIG 7A

# FIG 7B

Europäisches
Patentamt

European
Patent Office

Office européen
des brevets

# EUROPEAN SEARCH REPORT

**Application Number**

EP 23 20 0994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LU CHUNG-CHENG ET AL: "Optimal scheduling of a taxi fleet with mixed electric and gasoline vehicles to service advance reservations", TRANSPORTATION RESEARCH PART C:EMERGING TECHNOLOGIES, PERGAMON, NEW YORK, NY, GB, vol. 93, 4 July 2018 (2018-07-04), pages 479-500, XP085432160, ISSN: 0968-090X, DOI: 10.1016/J.TRC.2018.06.015 * abstract * * section 1, 2,3 * | 1-10 | INV. G06Q10/0631 G06Q50/40 G08G1/00 |
| A | US 2018/204158 A1 (RATTI CARLO FILIPPO [US] ET AL) 19 July 2018 (2018-07-19) * abstract * * paragraphs [0012], [0013], [0015], [0017] - [0024] * | 1-10 | |
| A | US 2017/061335 A1 (LOOMAN WILLIAM GEORGE [NZ] ET AL) 2 March 2017 (2017-03-02) * abstract * * paragraphs [0005] - [0012], [0026] - [0038], [0044] * | 1-10 | **TECHNICAL FIELDS SEARCHED (IPC)** G06Q G08G |

The present search report has been drawn up for all claims

| Place of search | Date of completion of the search | Examiner |
|---|---|---|
| Munich | 13 March 2024 | Moltenbrey, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 20 0994**

This annex lists the patent family members relating to the patent documents cited in the above-mentioned European search report.
The members are as contained in the European Patent Office EDP file on
The European Patent Office is in no way liable for these particulars which are merely given for the purpose of information.

**13-03-2024**

| Patent document cited in search report | | | Publication date | Patent family member(s) | | | Publication date |
|---|---|---|---|---|---|---|---|
| US 2018204158 | A1 | | 19-07-2018 | AU | 2018210259 | A1 | 01-08-2019 |
| | | | | BR | 112019014723 | A2 | 10-03-2020 |
| | | | | CA | 3050520 | A1 | 26-07-2018 |
| | | | | CN | 110431574 | A | 08-11-2019 |
| | | | | EP | 3571643 | A1 | 27-11-2019 |
| | | | | RU | 2019124939 | A | 19-02-2021 |
| | | | | SG | 11201906656P | A | 27-08-2019 |
| | | | | US | 2018204158 | A1 | 19-07-2018 |
| | | | | WO | 2018136687 | A1 | 26-07-2018 |
| US 2017061335 | A1 | | 02-03-2017 | CA | 2876204 | A1 | 19-12-2013 |
| | | | | US | 2013339098 | A1 | 19-12-2013 |
| | | | | US | 2017061335 | A1 | 02-03-2017 |
| | | | | US | 2019251485 | A1 | 15-08-2019 |
| | | | | WO | 2013188097 | A2 | 19-12-2013 |
| | | | | WO | 2013188843 | A2 | 19-12-2013 |

EPO FORM P0459

For more details about this annex : see Official Journal of the European Patent Office, No. 12/82